# EUROPÄISCHE PATENTSCHRIFT

(11) **EP 0 418 728 B1**
(45) Veröffentlichungstag und Bekanntmachung des Hinweises auf die Patenterteilung: **17.11.1994**
(21) Anmeldenummer: 90117619.8
(22) Anmeldetag: 13.09.1990
(51) Int. Cl.: B29C 67/16, B29C 67/24, B29C 67/14, C04B 35/00, C04B 26/02

(54) **Verfahren zur Herstellung von mit keramischen Pulvern gefüllten thermoplastischen Kunststoffen**
Method for preparing ceramic powder-containing thermoplastic materials
Procédé de préparation de matières thermoplastiques contenant des poudres céramiques

(30) Priorität: 22.09.1989 DE 3931652
(43) Veröffentlichungstag der Anmeldung: 27.03.1991
(73) Patentinhaber: BASF Aktiengesellschaft, 67063 Ludwigshafen (DE)
(72) Erfinder: Sterzel, Hans-Josef, Dr., D-6701 Dannstadt-Schauernheim (DE)

(56) Entgegenhaltungen:
- EP-A- 0 087 699
- DE-A- 1 454 804
- DE-A- 3 245 184
- US-A- 3 177 272
- US-A- 4 110 843
- US-A- 4 927 597
- PATENT ABSTRACTS OF JAPAN vol. 10, no. 207 (M-500)(2263) 19. Juli 1986 & JP-A-61 049 824 ( TOKAI CARBON CO LTD ) 11. März 1986

## Beschreibung

Thermoplastische Kunststoffe werden mit mineralischen Füllstoffen z.B. Wollastonit, Talkum, Kreide oder Quarzmehl gefüllt, um die Steifigkeit und Festigkeit zu erhöhen und die thermische Ausdehnung, den Schrumpf und den Verzug zu vermindern.

Sofern der Gehalt an mineralischen Füllstoffen einen Volumenanteil von etwa 30 % nicht überschreitet, ist ihre Einarbeitung in die aufgeschmolzenen Kunststoffe im allgemeinen nicht mit besonderen Schwierigkeiten verbunden. Bei höheren Füllgraden wird jedoch das Fließverhalten der Massen bei der thermoplastischen Verarbeitung derart schlecht, daß sie sich kaum, z.B. durch Spritzgießen verarbeiten lassen.

In neuerer Zeit gewinnt auch ein Verfahren zur Herstellung von keramischen Formkörpern zunehmend an Bedeutung, bei dem man einen thermoplastischen Kunststoff mit keramischen Pulvern versetzt, in einer geeigneten Maschine erhitzt, verformt und abkühlen läßt. Anschließend wird der Kunststoff z.B. durch Aufheizen beseitigt bevor schließlich die keramischen Massen versintert werden. Bei diesem Verfahren benötigt man thermoplastische Kunststoffe, die einen Volumenanteil von mindestens 50 % an keramischem Material enthalten. Erst mit diesem und höheren Füllgraden ist es möglich, aus den geformten Körpern nach Entfernen des thermoplastischen Bindemittels einigermaßen feste Grünkörper zu erhalten, die die weiteren Verfahrensschritte, vor allem das Sintern, unbeschadet überstehen.

Je höher der Füllgrad ist, desto geringer ist der Sinterschrumpf und desto besser ist die Maßhaltigkeit der Formteile. Deshalb strebt man für den Spritzguß oder die Extrusion keramischer Teile möglichst hohe Volumenfüllgrade des keramischen Pulvers an. Dies gilt im wesentlichen auch für die Herstellung keramischer Fasern. Eine Möglichkeit, keramische Fasern herzustellen besteht darin, kermamische Pulver mit einem Polymeren zu mischen, diese Mischung durch Lösen, Pyrolyse oder Hydrolyse zu entfernen und die sogenannte "grüne" Faser zu sintern. Hierzu muß bei einem möglichst großen Volumenfüllgrad eine gute Verspinnbarkeit gewährleistet sein.

Die Herstellung solcher Massen mit einem Volumenanteil von ≧50 % an keramischen Pulvern ist jedoch mit erheblichen Schwierigkeiten verbunden, wenn man diese keramischen Pulver in die Schmelze eines Thermoplasten einmischen will. Eine lange Mischzeit ist nötig, um die Masse zu homogenisieren. Dabei werden die Agglomerate des Pulvers zerteilt und die einzelnen Pulverteilchen vom Polymeren benetzt. Es hat sich gezeigt, daß die Desagglomeration des Pulvers unvollständig ist und Volumenfüllgrade oberhalb 50 % kaum zu erreichen sind. Durch die Behandlung der Pulver mit Dispergierhilfsmitteln wie Polyethylenoxiden, Montanesterwachsen, langkettigen Carbonsäuren oder langkettigen Hydroxicarbonsäuren wird die Dispergierzeit zwar etwas reduziert, aber die Agglomeratzerteilung nicht wesentlich gefördert. Aufgrund der langen Mischzeiten unter hohen Schergefällen werden die Werkstoffe der Mischaggregate, hauptsächlich Eisen, stark abgerieben und damit der Ansatz verunreinigt.

Aus der DE-A-14 54 804 ist es bereits bekannt, bis zu 5 Gew.% Pigmente in Thermoplastschmelzen einzumischen, indem der Thermoplastschmelze eine Dispersion der Pigmente in einem inerten Lösungsmittel stromabwärts in einem Extruder zugemischt werden.

In der DE-PS 32 45 184 wird ein Verfahren zur Herstellung spritzgießfähiger keramischer Massen beschrieben, bei dem keramische Pulver in einem organischen Lösungsmittfel vorgelegt werden, wobei dieses Gemisch Wachse, Öle und/oder Kunststoffe enthält. Diesem Gemisch wird ein gelöster oder gasförmiger Reaktant zugesetzt, der in dem Gemisch eine Lösungspolymerisation bewirkt. Das Verfahren hat den Nachteil, daß hierbei Kunststoffe mit schwer kontrollierbaren Molmassen entstehen.

Der vorliegenden Erfindung lag die Aufgabe zugrunde, ein Verfahren zur Herstellung von mit keramischen Pulvern gefüllten Massen aus thermoplastischen Kunststoffen durch Vermischen der keramischen Pulver mit den geschmolzenen thermoplastischen Kunststoffen bereitzustellen, bei dem die Nachteile der bekannten Verfahren vermieden werden und mit dem es gelingt, Massen aus thermoplastischen Kunststoffen mit einem hohen Füllgrad an keramischen Pulvern herzustellen.

Es wurde gefunden, daß diese Aufgabe dadurch gelöst werden kann, daß man die thermoplastischen Kunststoffe in einer aus mehreren hintereinanderliegenden Zonen bestehenden Mischstrecke in einer ersten Zone aufschmilzt, in der zweiten Zone dem geschmolzenen Kunststoff eine Suspension des keramischen Pulvers in einem organischen mit dem geschmolzenen Kunststoff einphasig mischbaren und dessen Viskosität herabsetzenden Lösungsmittel zudosiert und mit dem geschmolzenen Kunststoff vermischt, in der dritten Zone das Lösungsmittel unter vermindertem Druck abzieht und in der vierten Zone die das keramische Pulver enthaltende Schmelze komprimiert und extrudiert.

Das erfindungsgemäße Verfahren wird in marktgängigen Extrudern durchgeführt, deren Förder-, Knet- und Mischelemente den Bedürfnissen entsprechend baukastenartig zusammengesetzt werden. Vorzuziehen sind Doppelwellenextruder, weil diese selbstreinigend sind und ein schmales Verweilzeitspektrum aufweisen. Im vordersten Teil des Extruders wird das Thermoplastgranulat zudosiert. Es schließt sich die Aufschmelzzone an. Die Pulversuspension wird erst in die aufgeschmolzene Masse gepumpt. Damit wird vermieden, daß die Pulversuspension mit dem noch nicht plastifizierten Thermoplasten zusammenkommt und an dieser Stelle ein erhöhter Metallabrieb aufgrund der hohen Scherkräfte zustande kommt.

Nach dem Zusammenfluß von Schmelze und Suspension schließt sich eine Mischzone an, in welchem Suspension und Schmelze homogen gemischt werden. Danach wird das Lösungsmittel über einen oder mehrere Entgasungsdome unter vermindertem Druck abdestilliert. Es schließt sich eine Kompressionszone an, in der die weitgehend vom Lösungsmittel befreite Masse komprimiert wird, bevor sie durch Düsen extrudiert wird. Die extrudierten Stränge werden gekühlt und zu Granulat abgeschlagen.

Als thermische Kunststoffe sind beispielsweise geeignet Polyacrylate, Äthylcellulose, ABS, Hydroxypropylcellulose, Polyäthylen hoher und niedriger Dichte, oxidiertes Polyäthylen, Celluloseacetat, Polyamide, Äthylen-Acrylsäure-Copolymerisate, Celluloseacetatbutyrat, Polystyrole, Polybutylen, Polysulfone, Polyäthylenglykole und Polyäthylenoxide. Besonders geeignet ist Polyoximethylen und dessen Copolymerisate.

Der aufgeschmolzene Kunststoff wird erfindungsgemäß in der zweiten Zone mit einer Suspension eines keramischen Pulvers in einem organischen Lösungsmittel vermischt. Als keramische Pulver kommen beispielsweise die Oxide, Nitride und Carbide der Elemente der 3. und/oder 4. Haupt- oder Nebengruppe des Periodischen Systems in Frage, z.B. vorzugsweise Si-Carbid, Si-Nitrid, Aluminiumoxid oder Zirkoniumdioxid, Bornitrid BN, Borcarbid B₄C oder Titancarbid. Die keramischen Pulver haben zweckmäßig eine Körnung von ≦5 µm, vorzugsweise von 0,2 bis 2 µm. Der Ausdruck keramische Pulver soll auch faserförmige Stoffe mit Längen von 0,01 bis 1 mm umfassen, beispielsweise auf der Basis von Aluminiumoxid, Siliciumcarbid oder Siliciumnitrid. Diese keramischen Pulver werden in einem organischen Lösungsmittel suspendiert, das den jeweils eingesetzten Kunststoff zu lösen vermag. Beispiele sind Decalin oder Xylol für Polyethylen und Polyethylen/Wachs-Mischungen, Diglykoldimethylether für Polystyrol und Copolymeren mit Acrylnitril oder Benzylalkohol für Polyethylenterephthalat, Polybutylenterephthalat, Polyamid 6 oder -6,6, Polyoximethylen oder Polysulfone.

Falls erforderlich werden bei der Herstellung der Suspensionen die keramischen Pulver einer desagglomerierenden Behandlung unter der Einwirkung von Scherkräften, z.B. in Kugelmühlen, gegebenenfalls in Gegenwart von Dispergierhilfsmitteln unterzogen. Der Volumenanteil der Pulver im Suspensionsmittel ergibt sich durch Optimierung der Bedingungen: Einerseits soll er möglichst groß sein, um möglichst wenig Lösungsmittel im Extruder abdestillieren zu müssen, andererseits darf die Viskosität der Suspension den Desagglomerationsvorgang nicht behindern. Zudem muß die Suspension noch pumpbar sein. Es hat sich gezeigt, daß Volumengehalte von 10 bis 35 %, vorzugsweise von 25 bis 33 %, zu optimalen Ergebnissen führen. Falls mit Volumengehalten unterhalb von 25 % desagglomeriert werden muß, kann die Suspension durch teilweises Verdampfen des Lösungsmittels aufkonzentriert werden. Es ist auch möglich, die Desagglomerierung in einem niedrigsiedenden Suspensionsmittel oder Suspensionsmittelgemisch bei niedrigen Volumengehalten durchzuführen und danach ein höhersiedendes, mit dem niedrigsiedenden Suspensionsmittel mischbares Suspensionsmittel zuzusetzen und das oder die niedrigsiedenden Suspensionsmittel abzudestillieren.

Diese Vorgehensweise ist besonders dann angebracht, wenn das eigentliche Suspensionsmittel eine erhöhte Dichte und/oder Viskosität aufweist und damit die Desagglomeration durch Mahlen erschwert.

Die Suspensionen werden über eine Pumpvorrichtung in einen Entgasungsextruder gepumpt. Dort wird die Suspension mit der Schmelze des thermoplastischen Kunststoffs gemischt und im gleichen Extruder das Lösungsmittel unter Anwendung erniedrigten Drucks von der Mischung abdestilliert und die weitgehend lösungsmittelfreie Masse durch Düsen extrudiert.

Überraschenderweise tritt bei dieser Verfahrensweise keine Reagglomeration der Pulver auf. Die Güte der Desagglomeration in der Suspensionsstufe bleibt völlig erhalten.

Die Verweilzeit im Extruder beträgt nur 1 bis 5 Minuten, so daß der Thermoplast kaum geschädigt wird und nahezu kein Molmassenabbau stattfindet. Außerdem ist der Materialabrieb extrem gering.

Es gelingt mit dem erfindungsgemäßen Verfahren porenfreie thermoplastische Massen mit einem Volumenfüllgrad von 40 bis 80 % an keramischen Pulvern herzustellen. Die keramischen Pulver sind in der thermoplastischen Masse homogen verteilt.

### Beispiel 1 (Vergleichsbeispiel)

Mittels eines Zweiwellenextruders werden 5,0 kg/h Polystyrol bei 250 °C aufgeschmolzen und durch Düsen extrudiert. Das eingesetzte Polystyrol ist durch einen Schmelzindex von 24 g/10 min, gemessen nach DIN 53 735 bei 200°C und 21,6 kg Auflagegewicht, charakterisiert. An der gleichen Stelle, wo das Polystyrol-Granulat zudosiert wird, wird in steigenden Mengen bei 400°C getrocknetes Siliziumnitrid-Pulver (Korngröße 0,5 bis 1,5 µm) mit einem Eisengehalt von 0,011 Gew.-% zudosiert. Auf das Siliziumnitrid-Pulver waren 2 Gew.-% Stearinsäure als Dispergator aufgebracht worden. Bei einer Dosierung von 10,5 kg/h, die einem Volumenanteil von 40 % entspricht, ist das Drehmoment an der Extruderwelle so groß geworden, daß die Dosierung nicht gesteigert werden kann. In einem zweiten Lauf wird das Granulat mit 40 Vol.-% Siliziumnitrid als Ausgangsmaterial eingesetzt und mit weiterem Siliziumnitrid vermischt. Der Versuch muß bei 47 Vol.-% Siliziumnitrid abgebrochen werden, weil das maximale Drehmoment erreicht ist. Der Eisengehalt beträgt im Durchschnitt 0,013 Gew.-%, einzelne Granulatkörner enthielten abgeriebene Eisenteile mit 50 bis 100 µm Größe.

### Beispiel 2

Mittels einer Rührwerkskugelmühle wird eine desagglomerierte Suspension von Siliziumnitrid-Pulver in Diglykoldimethylether hergestellt. Der Volumenanteil des Siliziumnitrid-Pulvers (Korngröße 0,5 bis 1,5 µm) mit einem Eisengehalt von 0,11 Gew.-%, beträgt 30 %, der Anteil an Stearinsäure, bezogen auf das Siliziumnitrid-Pulver, 2 %. Diese Suspension wird mit einem Volumenstrom von 24,3 l/h in der zweiten Zone eines Doppelwellenentgasungsextruders mit einer in der ersten Zone erzeugten Polystyrolschmelze mit einem Massenstrom von 4,0 kg/h bei 250°C gemischt. Das eingesetzte Polystyrol ist durch einen Schmelzindex von 24 g/10 min, gemessen nach DIN 53 735 bei 200°C und 21,6 kg Auflagegewicht, charakterisiert. Anschließend an die Mischzone werden in der folgenden Zone 17 l/h Diglykoldimethylether bei ca. 50 mbar abdestilliert und ein Granulat erhalten, das 64 Vol.-% Siliziumnitrid-Pulver enthält. Der Eisengehalt beträgt 0,009 Gew.-%. Es wird hierbei mikroskopisch nachweisbarer Eisenabrieb gefunden.

### Beispiel 3 (Vergleichsbeispiel)

Mittels eines Zweiwellenextruders werden 6 kg/h Polyoximethylen bei 180°C aufgeschmolzen und durch Düsen extrudiert. Das verwendete Polyoximethylen ist durch einen Schmelzindex von 13 g/10 min, gemessen nach DIN 53 735 bei 190°C und 2,16 kg Auflagegewicht, charakterisiert. An der gleichen Stelle, wo das Polyoximethylen-Granulat zudosiert wird, wird in steigenden Mengen bei 400°C getrocknetes Siliziumnitrid-Pulver mit einem Eisengehalt von 0,011 Gew.-% (Typ LC 10) zudosiert. Auf das Siliziumnitrid-Pulver waren 3 Gew.-% Polyethylenoxid der Molmasse 400 als Dispergator aufgebracht worden.

Bei einer Dosierung von 9,6 kg/h, die einem Volumenanteil von 42 % Siliziumnitrid-Pulver entspricht, ist das maximale Drehmoment des Extruders erreicht worden. In einem zweiten Lauf wird das so hergestellte Granulat als Ausgangsmaterial eingesetzt und mit weiterem Siliziumnitrid vermischt. Der Versuch muß bei 50 Vol.-% Siliziumnitrid abgebrochen werden, weil das maximale Drehmoment erreicht ist. Der Eisengehalt beträgt 0,014 Gew.-% im Durchschnitt. Einzelne Granulatkörner enthalten abgeriebene Eisenteilchen bis 80 µm Größe.

### Beispiel 4

Mittels einer Rührwerkskugelmühle wird eine desagglomerierte Suspension von Siliziumnitrid-Pulver (Korngröße 0,5 bis 1,5 µm) in Benzylalkohol hergestellt. Der Volumenanteil des Siliziumnitrid-Pulvers beträgt 33 %, der Anteil an Polyethylenoxid der Molmasse 400, bezogen auf das Siliziumnitrid-Pulver, 3 Gew.-%. Diese Suspension wird mit einem Volumenstrom von 20,3 l/h in einem in Beispiel 2 beschriebenen Doppelwellenentgasungsextruder mit einer Polyoximethylenschmelze mit einem Massenstrom von 5 kg/h bei 185°C gemischt. Das verwendete Polyoximethylen ist durch einen Schmelzindex von 13 g/10 min, gemessen nach DIN 53 735 bei 190°C und 2,16 kg Auflagegewicht, charakterisiert. Anschließend an die Mischzone werden 13,6 l/h Benzylalkohol bei ca. 30 mbar abdestilliert. Das so erhaltene Granulat enthält 65 Vol.-% Siliziumnitrid-Pulver. Der Eisengehalt beträgt im Durchschnitt 0,009 Gew.-%. Im Granulat ist mikroskopisch kein Eisenabrieb nachweisbar.

## Patentansprüche

1. Verfahren zur Herstellung von mit keramischen Pulvern gefüllten Massen aus thermoplastischen Kunststoffen durch Vermischen der keramischen Pulver mit den geschmolzenen thermoplastischen Kunststoffen, dadurch gekennzeichnet, daß man die thermoplastischen Kunststoffe in einer aus mehreren hintereinanderliegenden Zonen bestehenden Mischstrecke in einer ersten Zone aufschmilzt, in der zweiten Zone dem geschmolzenen Kunststoff eine Suspension des keramischen Pulvers in einem organischen mit dem geschmolzenen Kunststoff einphasig mischbaren und dessen Viskosität herabsetzenden Lösungsmittel zudosiert und mit dem geschmolzenen Kunststoff vermischt, in der dritten Zone das Lösungsmittel unter vermindertem Druck abzieht und in der vierten Zone die das keramische Pulver enthaltende Schmelze komprimiert und extrudiert.

2. Verfahren nach Anspruch 1, dadurch gekennzeichnet, daß man als Suspensionen eines keramischen Pulvers in einem organischen Lösungsmittel solche einsetzt, die einer desagglomerierenden Behandlung durch Einwirkung von Scherkräften unterzogen worden sind.

3. Verfahren nach den Ansprüchen 1 bis 2, dadurch gekennzeichnet, daß man als keramische Pulver Oxide, Nitride und/oder Silicide der Elemente der 3. oder 4. Haupt- oder Nebengruppe des Periodischen Systems einsetzt.

4. Verfahren nach den Ansprüchen 1 bis 3, dadurch gekennzeichnet, daß die Suspensionen einen Volumenanteil von 10 bis 35 % an keramischen Pulvern aufweisen.

5. Verfahren nach den Ansprüchen 1 bis 4, dadurch gekennzeichnet, daß die Suspension auch Whisker oder Fasern mit einer Länge von 0,01 bis 1 mm enthält.

## Claims

1. A process for the preparation of a thermoplastic material containing ceramic powders as fillers, by mixing these ceramic powders with the molten thermoplastics, which comprises, in a mixing zone comprising a plurality of successive zones, melting the thermoplastics in a first zone, adding a suspension of the ceramic powder in an organic solvent which is miscible with the molten plastic in one phase and reduces the viscosity thereof, to the molten plastic in the second zone and mixing the components, removing the solvent under reduced pressure in the third zone, and compressing and extruding the melt containing the ceramic powder in the fourth zone.

2. A process as claimed in claim 1, wherein the suspension of a ceramic powder in an organic solvent has been subjected to deagglomeration by the action of shear forces.

3. A process as claimed in claim 1, wherein the ceramic powder is an oxide, nitride and/or silicide of a third or fourth main or sub-group element.

4. A process as claimed in claim 1, wherein the suspension contains from 10 to 35 % by volume of ceramic powders.

5. A process as claimed in claim 1, wherein the suspension also contains whiskers or fibers having a length of from 0.01 to 1 mm.

## Revendications

1. Procédé de préparation de masses chargées de poudres céramiques à partir de matières thermoplastiques, par mélange des poudres céramiques aux matières thermoplastiques fondues, caractérisé en ce que, dans un trajet de mélange se composant de plusieurs zones successives, on fond les matières thermoplastiques dans une première zone, on ajoute à la matière plastique fondue, dans la deuxième zone, une suspension de la poudre céramique dans un solvant organique qui est miscible en une seule phase à la matière plastique fondue et qui abaisse la viscosité de celle-ci, et on la mélange à la matière plastique fondue, on élimine le solvant sous pression reduite dans la troisième zone et, dans la quatrième zone, on comprime et on extrude la masse fondue contenant la poudre céramique.

2. Procédé selon la revendication 1, caractérisé en ce qu'on utilise, comme suspensions d'une poudre céramique dans un solvant organique, des suspensions qui ont été soumises à un traitement de désagglomération par application de forces de cisaillement.

3. Procédé selon la revendication 1 ou 2, caractérisé en ce qu'on utilise, comme poudres céramiques, des oxydes, des nitrures et/ou des siliciures des éléments des groupes IIIA, IVA, IIIB ou IVB du système périodique.

4. Procédé selon l'une quelconque des revendications 1 à 3, caractérisé en ce que les suspensions présentent une teneur en volume de 10 à 35% de poudres céramiques.

5. Procédé selon l'une quelconque des revendications 1 à 4, caractérisé en ce que la suspension contient aussi des whiskers ou des fibres de 0,01 a 1 mm de longueur.
